Europäisches Patentamt

European Patent Office

Office européen des brevets

(11) Veröffentlichungsnummer: **0 274 563**
**A2**

## (12) EUROPÄISCHE PATENTANMELDUNG

(21) Anmeldenummer: 87109320.9

(22) Anmeldetag: 29.06.87

(51) Int. Cl.4: **G02C 5/14**

(30) Priorität: 15.01.87 DE 3701034

(43) Veröffentlichungstag der Anmeldung:
20.07.88 Patentblatt 88/29

(84) Benannte Vertragsstaaten:
**AT BE CH DE ES FR GB GR IT LI LU NL SE**

(71) Anmelder: **Anger, Wilhelm**
**Chesa Pas-chüra**
**CH-7500 St. Moritz-Suvretta(CH)**

(72) Erfinder: **Anger, Wilhelm**
**Chesa Pas-chüra**
**CH-7500 St. Moritz-Suvretta(CH)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Bügel für eine Brille.**

(57) Ein Bügel für eine Brille weist eine Steckverbindung zwischen dem Schaft des Bügels und einem zunächst getrennt vom Schaft des Bügels gefertigten Bügelendstück auf. Die steckverbindung umfaßt eine Bohrung im einen der beiden Elemente sowie einen Zapfen am anderen der beiden Elemente, der in die Bohrung gesteckt ist, sowie eine Fixiereinrichtung zum Sichern der Relativlage zwischen dem Bügelendstück und dem Schaft. Die Fixiereinrichtung weist ein Klemmelement auf, das unterschiedliche Axialstellungen bezüglich der die Bohrung umgebenden Umfangswand einnehmen kann und je nach seiner Axialstellung die Umfangswand mehr oder weniger stark radial zusammendrückt und dadurch den Zapfen in der Bohrung festklemmt. Diese Ausbildung der Fixiereinrichtung erleichtert eine genaue Einstellung der Bügellänge sowie der Innenneigung des Bügels beim Anpassen desselben an die Kopfgeometrie des einzelnen Brillenträgers.

Fig.2

## Bügel für eine Brille

Die Erfindung bezieht sich auf einen Bügel für eine Brille mit einem länglichen, im wesentlichen geraden Schaft, der an seinem ersten Schaftende mittels eines Scharniers mit einer Backe oder einem Gelenkstück der Brille verbindbar ist, und mit einem Bügelendstück, das einen länglichen, im wesentlichen geraden ersten Abschnitt, der in Verlängerung des Schaftes verläuft, und einen sich an den ersten Abschnitt anschließenden, länglichen zweiten Abschnitt aufweist, der vom ersten Abschnitt aus unter Einschluß eines Winkels kleiner als 180° nach unten verläuft.

Ein solcher Bügel ist grundsätzlich bekannt. Der zweite Abschnitt des Bügelendstücks hat die Funktion, entweder selber hinter dem Ohr am Schädel eines Brillenträgers anzuliegen oder einen weiteren Abschnitt des Bügelendstücks abzustützen, der am Schädel und/oder am Ohr des Brillenträgers anliegt. Auf jeden Fall soll durch die Anlage des zweiten Abschnitts oder des von ihm getragenen weiteren Abschnitts dafür gesorgt werden, daß der Bügel zusammen mit einem gleichartigen zweiten Bügel auf der anderen Seite des Kopfes und zusammen mit einer Stegpartie die Brille zuverlässig am Kopf des Brillenträgers hält und abstützt. Der Bügel kann diese Aufgabe um so eher erfüllen, je besser er der individuellen Ohr- und Kopfgeometrie des Brillenträgers angepaßt ist. Zur Kopfgeometrie gehört auch die Innenneigung der Kontaktfläche am Kopf und/oder am Ohr, der die Innenneigung des zweiten Abschnitts des Bügelendstücks folgen sollte. Herkömmliche Bügel der genannten Art werden jedoch grundsätzlich einstückig und mit ein und derselben Innenneigung gefertigt, wobei dann allenfalls durch plastisches Verformen von seiten beispielsweise des anpassenden Augenoptikers der Versuch gemacht wird, eine geeignete Innenneigung des Bügelendstücks bzw. des zweiten Abschnitts herbeiführen. Diese Anpassung erfolgt zugleich mit der Anpassung der Länge des Bügels. Da es sich hierbei um einen Vorgang des Anprobierens handelt, ist das Ergebnis oft unzureichend, was zu verhältnismäßig - schlechtem Tragekomfort der Brille führt.

Ein Bügel mit den Merkmalen des Oberbegriffs von Patentanspruch 1 gehört aufgrund der deutschen Patentanmeldung P 36 04 358.3 zum Stand der Technik. Dieser bekannte Bügel weist zwischen dem Bügelschaft und dem Bügelendstück eine Steckverbindung auf, die es ermöglicht, durch Ablängen des Bügeleschaftes vor dem Zusammenfügen desselben mit dem Bügelendstück für eine geeignete Länge des Bügels zu sorgen. Ferner ist die Steckverbindung mit einer Fixiereinrichtung versehen, die im wesentlichen aus in Axialrichtung der Bohrung verlaufenden, von der Oberfläche des Zapfens oder der Bohrung vorstehenden Stegen bzw. Leisten besteht, die in Eingriff mit der Oberfläche des jeweils anderen Elementes (Bohrung oder Zapfen) stehen. Die Oberfläche des nicht mit den Stegen bzw. Leisten versehenen Elementes (Bohrung oder Zapfen) ist im wesentlichen zylindrisch. Durch diese zylindrische Ausbildung der einen Oberfläche ist dafür gesorgt, daß der Zapfen in die Bohrung unter beliebigem Drehwinkel des Bügelendstücks relativ zum Schaft eingesteckt werden kann, um auf diese Weise eine vorgegebene bzw. gewünschte Innenneigung des Bügelendstücks einzustellen. Nachdem dies geschehen ist, wird der Zapfen tiefer in die Bohrung eingesteckt, um dadurch die Leisten in Eingriff mit der gegenüberliegenden Oberfläche zu bringen, wodurch die Fixierung der zuvor eingestellten Innenneigung erfolgt. Diese Ausbildung eignet sich insbesondere dann, wenn es möglich ist, die Länge des Bügels und die Innenneigung vorzubestimmen; sie ist jedoch dann weniger geeignet, wenn die erforderliche Innenneigung erst durch Anpassen des Bügels am Kopf des Brillenträgers gefunden werden soll, weil im Fall dieses bekannten Bügels zu dem Zeitpunkt, zu dem die Innenneigung eingestellt wird, der Bügel noch eine Überlänge hat und demzufolge während des Anpassens ein Probieren unter gleichzeitiger Einstellung von Länge des Bügels und Innenneigung des Bügelendstücks nicht möglich ist.

Der Erfindung liegt die Aufgabe zugrunde, den gattungsgemäßen Bügel derart auszubilden, daß seine Länge und die Innenneigung seines Bügelendstücks stufenlos einstellbar sind, wobei diese Einstellungen schon erreichbar sein sollen, bevor ihre Fixierung erfolgt, damit ein wiederholtes Ändern der Einstellungen beim Anpassen des Bügels vor der Fixierung möglich ist. Ferner soll der zu schaffende Bügel gewährleisten, daß das Bügelendstück während des Anpassens und vor der endgültigen Fixierung schon so fest am Bügelschaft sitzt, daß zwar noch eine Änderung ihrer Relativstellungen möglich ist, sie andererseits aber schon derart miteinander verbunden sind, daß sich eine voreingestellte Relativstellung beim Anprobieren der Brille und beim Manipulieren an derselben während des Anpassens, insbesondere beim Abnehmen der Brille, nicht ohne weiteres ändert.

Diese Aufgabe wird erfindungsgemäß durch den Bügel gemäß Patentanspruch 1 gelöst, d.h. im wesentlichen dadurch, daß das Fixieren mittels eines Klemmelementes erfolgt, das in unterschiedliche axiale Relativstellungen bezüglich der Umfangswand der Bohrung gebracht werden kann und dadurch für unterschiedlich starke Haftreibung zwischen den Oberflächen von Zapfen und Bohrung sorgt. Das Klemmelement klemmt somit die Umfangswand der Bohrung mehr oder weniger fest auf den Zapfen. Dies ermöglicht es, während des Anpassens eine geeignete Haftreibung zwischen Zapfen und Umfangswand derart einzustellen, daß die Relativstellungen zwischen Bügelendstück und Schaft noch ohne großen Kraftaufwand veränderbar sind, die jeweils voreingestellte Relativstellung jedoch hinreichend gehalten wird, und daß nach dem Auffinden der gewünschten Relativstellung die Haftreibung so weit erhöht wird, daß das Bügelendstück und der Schaft dauerhaft miteinander verbunden bzw. fixiert sind. Dabei erfordert diese endgültige Fixierung keine Relativbewegung zwischen Bügelendstück und Schaft, sondern lediglich eine Relativbewegung zwischen dem Klemmelement und der Umfangswand. Durch die letztgenannte Relativbewegung wird jedoch weder die Länge des Bügels noch die Inneneigung des Bügelendstücks verändert.

In vorteilhafter Ausbildung der Erfindung kann vorgesehen sein, daß sowohl die Oberfläche des Zapfens als auch die Oberfläche der Bohrung über die gesamte Länge des Eingriffs zwischen Bohrung und Zapfen zylindrisch ausgebildet sind und darüber hinaus aufgerauht sind, um eine große Kontaktfläche und starke Haftreibung zwischen Zapfen und Bohrung zu erzielen. Alternativ kann jedoch die Haftreibung zwischen Bohrung und Zapfen, d.h. der Kraftschluß zwischen diesen beiden Elementen, ergänzt sein durch einen Formschluß, der dadurch herbeigeführt sein kann, daß der Zapfen in seiner Längsrichtung verlaufende, radial vorstehende Vorsprünge aufweist, die sich in der maximaler Zusammendrückung der Umfangswand entsprechenden Stellung des Klemmelementes in die Oberfläche der Bohrung eindrücken.

Ferner kann in vorteilhafter Ausbildung der Erfindung vorgesehen sein, daß die Oberfläche der Bohrung und/oder des Zapfens mit einem durch Durck freisetzbaren Klebstoff beschichtet ist. Dies führt zu einer besonders festen Verbindung zwischen Bügelendstück und Zapfen bei der endgültigen Fixierung, ohne daß die Möglichkeit verlorengeht, während des Anpassens bereits eine hinreichend hohe Haftreibung zwischen Zapfen und Bohrung zu erzielen. Ein solcher Klebstoff, der zu einer unlösbaren Verbindung führt, kommt jedoch dann nicht zur Anwendung, wenn die Verbindung zwischen Bügelendstück und Schaft lösbar sein soll. Eine lösbare Verbindung ist insbesondere dann vorteilhaft, wenn es möglich sein soll, nach einer gewissen Tragezeit der Brille die Bügellänge und/oder die Inneneigung des Bügelendstücks erneut ändern zu können.

In weiterer vorteilhafter Ausgestaltung der Erfindung kann vorgesehen sein, daß das Klemmelement eine Hülse ist, die auf die Außenseite der Umfangswand oder den Zapfen geschraubt ist und mit einem sich konisch verjüngenden Endabschnitt ihrer Hülsenbohrung gegen eine Kontaktfläche am freien Ende der Umfanswand drückt und dadurch für den Reibschluß zwischen Bohrung und Zapfen sorgt. Alternativ dazu kann das Klemmelement als Schieber ausgebildet sein, der mit einer Längsnut versehen ist, die mit einem komplementär geformten Vorsprung der Umfangswand derart in Eingriff steht, daß die beiden Nutflanken die Flanken des Vorsprungs zueinander drücken und dadurch die Umfangswand an den Zapfen andrücken und den Reibschluß zwischen Bohrung und Zapfen herbeiführen.

Weitere vorteilhafte Ausgestaltungen der Erfindung sind in den Unteransprüchen gekennzeichnet und ergeben sich aus der folgenden Beschreibung von Ausführungsbeispielen der Erfindung.

Ausführungsbeispiele der Erfindung sind in den Zeichnungen dargestellt und werden im folgenden nächer erläutert. Es zeigen:

Fig. 1 eine perspektive Ansicht eines Bügels gemäß einer ersten Ausführungsform der Erfindung;

Fig. 2 eine Seitenansicht, teilweise im Schnitt, des Bügelendstücks des Bügels gemäß Fig. 1, wobei jedoch der Zapfen einer Steckverbindung nicht dargestellt ist;

Fig. 3 eine Schnittdarstellung gemäß A-B in Fig. 2;

Fig. 4 eine ausschnittsweise Seitenansicht eines Bügelendstücks gemäß einer zweiten Ausführungsform des erfindungsgemäßen Bügels in Fig. 2 ähnlicher Darstellung;

Fig. 5 eine Draufsicht zu Fig. 4;

Fig. 6 eine Schnittdarstellung gemäß C-D in Fig. 4;

Fig. 7 eine Schnittdarstellung gemäß E-F in Fig. 4;

Fig. 8 eine Ansicht des ersten Abschnitts des Bügelendstücks gemäß Fig. 4;

Fig. 9 eine Ansicht eines Schiebers der zweiten Ausführungsform bei Betrachtung von links in Fig. 6;

Fig. 10 eine ausschnittsweise Seitenansicht eines Bügelendstücks einer dritten Ausführungsform der Erfindung in Fig. 2 ähnlicher Darstellung;

Fig. 11 eine Draufsicht zu Fig. 10;

Fig. 12 eine Schnittdarstellung gemäß F-H in Fig. 10;

Fig. 13 eine Schnittdarstellung gemäß J-K in Fig. 10;

Fig. 14 eine Seitenansicht des ersten Abschnitts des Bügelendstücks der dritten Ausführungsform;

Fig. 15 eine Ansicht eines Schiebers der dritten Ausführungsform von unten; und

Fig. 16 eine Fig. 10 entsprechende Darstellung, wobei jedoch der Schieber eine Zwischenstellung einnimmt, in der die Steckverbindung zwischen dem Bügelendstück und dem Schaftende noch nicht vollständig fixiert ist.

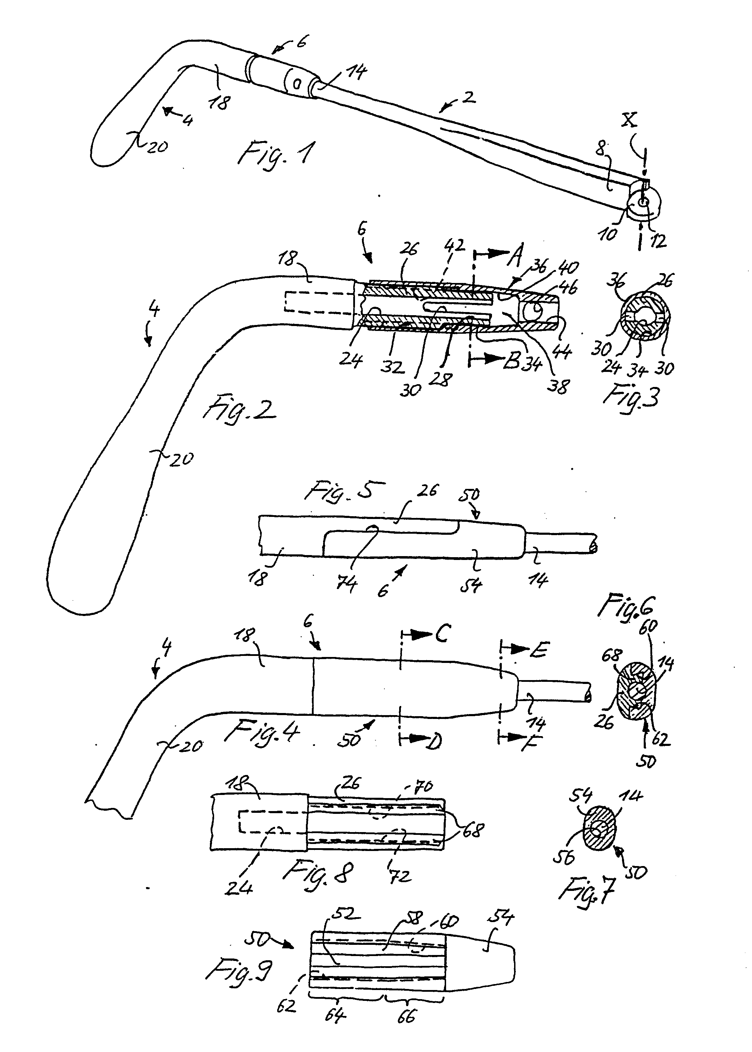

Der Bügel gemäß Fig. 1 umfaßt einen länglichen, im wesentlichen geraden Schaft 2 sowie ein Bügelendstück 4, das zunächst getrennt vom Bügelschaft 2 gefertigt worden und dann durch eine Steckverbindung 6 mit dem Schaft 2 fest verbunden worden ist.

Der Schaft 2 weist ein erstes Schaftende 8 auf, an dem ein Auge 10 ausgebildet ist, das zusammen mit weiteren, nicht dargestellten Elementen ein Scharnier bilden kann, mittels dessen der Bügel mit einer nicht dargestellten Backe oder einem nicht dargestellten Gelenkstück einer Brille verbindbar ist. Durch das Auge 10 und eine in diesem ausgebildete Scharnierbohrung 12 ist der Verlauf einer Scharnierachse X festgelegt.

Das zweite, in Fig. 1 linke Schaftende bildet einen Zapfen 14, der eine zylindrische Oberfläche und über seine gesamte Länge somit ein Kreisprofil hat. Außerhalb der Steckverbindung 6 ändert sich das Profil des Schaftes 2 in Richtung zum ersten Schaftende allmählich zu dem in Fig. 1 erkennbaren Profil in Form eines abgerundeten Rchtecks. Wie die Fig. 1 und 2 erkennen lassen, umfaßt das Bügelendstück 4 einen länglichen, im wesentlichen geraden ersten Abschnitt 18, der an seinem hinteren, in Fig. 1 linken Ende allmählich in einen gekrümmten, schräg nach unten verlaufenden, länglichen zweiten Abschnitt 20 übergeht. Der erste Abschnitt 18 und der zweite Abschnitt 20 sind einstükkig miteinander ausgebildet, wobei der zweite Abschnitt 20 die Funktion hat, am Ohr und/oder am Schädel des Brillenträgers möglichst ohne störende Druckspitzen anzuliegen. Das Bügelendstück 4 kann aus einem Kunststoff bestehen, vorzugsweise aus einem Polyetherimid. Der Schaft 2 kann ebenfalls aus einem Kunststoff, vorzugsweise Polyetherimid, bestehen; er kann jedoch auch aus Metall gefertigt sein.

Der gesamte Schaft 2 sowie auch der erste Abschnitt 18 des Bügelendstücks 4 sind bei Betrachtung von oben - etwas gekrümmt, damit der Bügel bei aufgesetzter Brille zum Kontaktbereich zwischen dem Bügelendstück und dem Schädel bzw. Ohr des Brillenträgers führt, ohne daß der Schaft 2 selber in Berührung mit dem Kopf des Brillenträgers kommt und ohne daß der erste Abschnitt 18 einen störenden seitlichen Druck auf den Schädel ausübt. Darüber hinaus weist das Bügelendstück 4 eine Innenneigung auf. Dies bedeutet, daß der zweite Abschnitt 20 nicht im wesentlichen in einer durch die Scharnierachse X und die Längsachse des Schaftes definierten Ebene liegt, sondern mit seinem unteren Ende aus dieser Ebene heraus verlagert ist, und zwar in Richtung zum nicht dargestellten Kopf des Brillenträgers. Diese Innenneigung ist beim beschriebenen Bügel aufgrund der besonderen Ausbildung der Steckverbindung 6 stufenlos einstellbar und dadurch der individuellen Schädelform des Brillenträgers anpaßbar. Darüber hinaus ermöglicht die spezielle Ausbildung der Steckverbindung 6, die Länge des Bügels, d.h. den Abstand zwischen der Scharnierachse X und dem zweiten Abschnitt 20 des Bügelendstücks 4, stufenlos einzustellen und der individuellen Kopfgeometrie des Brillenträgers anzupassen.

Im folgenden wird insbesondere unter Bezugnahme auf die Fig. 2 und 3 ausführlicher die Steckverbindung 6 zwischen dem Bügelendstück 4 und dem Schaft 2 gemäß der ersten Ausführungsform erläutert.

Im ersten Abschnitt 18 des Bügelendstücks 4 ist in Längsrichtung des ersten Abschnitts verlaufend eine Bohrung 24 mit zylindrischer Oberfläche ausgebildet. Die Bohrung 24 ist von einer Umfangswand 26 umgeben und am in Fig. 2 rechten, freien Ende 28 der Umfangswand 26 offen. An ihrem in Fig. 2 linken Ende ist die Bohrung 24 geschlossen. Die Umfangswand 26 ist mit zwei in Richtung der Bohrungsachse 24 verlaufenden Längsschlitzen 30 versehen, die einander bezüglich der Bohrungsachse gegenüberliegen und am freien Ende 28 der Umfangswand 26 offen sind.

Auf der Außenseite der Umfangswand 26 ist ein Außengewinde 32 ausgebildet. Dieses erstreckt sich nicht über die gesamte Länge der Umfangswand 26, sondern geht im Bereich des freien Endes 28 derselben über in eine auf der Außenseite der Umfangswand 26 ausgebildete, glatte Kontaktfläche 34, die beim dargestellten Ausführungsbeispiel über ihre gesamte Länge einen konstanten zylindrischen Durchmesser hat. Die Kante zwischen der Kontaktfläche 34 und der Stirnseite der Umfangswand 26 an deren freiem Ende 28 ist abgerundet.

Auf das Außengewinde 32 der Umfangswand 26 ist eine längliche, im wesentlichen zylindrische Hülse 36 geschraubt. Die Hülse 36 weist eine Hülsenbohrung 38 auf, die aus einem in Fig. 2 rechten, dem freien Ende 28 der Umfangswand 26 zugeordneten Endabschnitt 40 und einem sich nach links in Fig. 2 daran anschliessenden zweiten, anderen Endabschnitt 42 besteht. Der letztgenannte Endabschnitt 42 ist mit einem Innengewinde versehen, das in Eingriff mit dem Außengewinde 32 auf der Umfangswand 26 steht. Der erstgenannte, dem freien Ende 28 der Umfangswand 26 zugeordnete Endabschnitt 40 der Hülsenbohrung 38 ist konisch verjüngt ausgebildet, so daß der Durchmesser der Hülsenbohrung 38 im Bereich ihres Endabschnitts 40 nach rechts in Fig 2 allmählich abnimmt.

Der sich konisch verjüngende Endabschnitt 40 der Hülsenbohrung 38 und die Kontaktfläche 34 am freien Ende 28 der Umfangswand 26 sind derart aufeinander abgestimmt, daß die Oberfläche des Endabschnitts 40 in Berührung mit der Kontaktfläche 34 tritt, während die Hülse 36 auf die Umfangswand 26 geschraubt wird, und zwar zu einem Zeitpunkt, zu dem das Außengewinde 32 und das Innengewinde am Endabschnitt 42 sicher miteinander in Eingriff stehen, jedoch die Hülse 36 noch nicht vollständig auf die Umfangswand 26 geschraubt ist. Dies hat zur Folge, daß dann, wenn die Hülse 36 weiter auf die Umfangswand 26 geschraubt wird, der konisch sich verjüngende Endabschnitt 40 weiter über die Kontaktfläche 34 geschoben wird und dadurch die Umfangswand 26 im Bereich des freien Endes 28 radial zusammendrückt und verformt. Dabei hängt das Ausmaß dieser radialen Zusammendrückung von der Axialstellung der Hülse 36 relativ zur Umfangswand 26 ab.

An die Hülsenbohrung 38 schließt sich rechts von dieser in Fig. 1 eine zylindrische Bohrung 44 mit verringertem Durchmesser an, der gleich dem Durchmesser der Bohrung 24 im ersten Abschnitt 18 ist. Im Bereich der Bohrung 44 weist die Hülse 36 eine Werkzeugangriffsfläche in Form einer Querbohrung 46 auf.

Bevor das Bügelendstück 4 und der Schaft 2 zum Bügel zusammengefügt werden, wird der Schaft 2 auf die erforderliche Länge abgelängt, was dadurch erfolgen kann, daß vom Zapfen 14 ein solches Stück abgeschnitten wird, daß dann, wenn der Zapfen 14 bis zum Boden der Bohrung 24 in diese eingeschoben ist, der Bügel die gewünschte bzw. erforderliche Länge hat. Dies kann durch mehrfaches Probieren geschehen, wobei dann der Schaft 2 des Bügels erst in mehreren Schritten auf die erforderliche Länge gebracht wird. Alternativ dazu kann jedoch vom Bügel auch ein solches Stück abgeschnitten werden, daß dann, wenn das Bügelendstück korrekt individuell dem Brillenträger angepaßt ist, der Bügelschaft nicht am Boden der Bohrung 42 anstößt. Im letztgenannten Fall ist es möglich, das Bügelendstück 4 auf dem Schaft 2 durch Verschieben in der einen oder anderen Richtung anzupassen, ohne daß bei jedem Anpaßschritt der Schaft 2 weiter abgelängt zu werden braucht.

Bevor der abgelängte Schaft 2 in die Bohrung 24 eingesteckt wird, wird die Hülse 36 auf die Umfangswand 26 geschraubt, jedoch nur so weit, daß die Umfangswand 26 an ihrem freien Ende 28 noch nicht wesentlich zusammengedrückt wird. Wenn dann der vom zweiten Schaftende gebildete Zapfen 14 in die Bohrung 24 eingeschoben worden ist, wird die Hülse 36 so weit auf die Umfangswand 26 geschraubt, daß aufgrund der radialen Zusammendrückung der Umfangswand 26 die Haftreibung zwischen der Oberfläche der Bohrung 24 und der Oberfläche des Zapfens 14 derart ist, daß der Zapfen 14 in der Bohrung 24 zwar noch verschiebbar ist und daß das Bügelendstück 4 noch um die Achse der Bohrung 24 relativ zum Zapfen 14 drehbar ist, sich jedoch die Relativstellung zwischen dem Bügelendstück 4 und dem Zapfen 2 nicht schon durch leichtes Anstoßen gegen die Elemente des Bügels oder aufgrund des Gewichtes der Elemente des Bügels bei einer Änderung der Lage desselben verändert. In diesem Zustand sind dann der Schaft 2 und das Bügelendstück 4 aneinander vorfixiert. In diesem vorfixierten Zustand erfolgt die Anpassung des Bügels an die individuelle Kopfgeometrie des Brillenträgers. Dies kann dadurch geschehen, daß bei aufgesetzter, mit dem vorfixierten Bügel versehener Brille das Bügelendstück 4 auf dem Zapfen 14 in eine solche Stellung geschoben und um die Zapfenachse gedreht wird, bis der Bügel die korrekte Länge und das Bügelendstück 4 die korrekte Innenneigung hat. Während des Anpassens werden die momentane Länge und Innenneigung vom Anpasser und vom Brillenträger beurteilt und gegebenenfalls geändert, bis eine als korrekt empfundene Innenneigung des Bügelendstücks 4 und der Bügellänge gefunden sind. Alternativ zum vorstehend beschriebenen Vorgehen können jedoch Angaben zur korrekten Innenneigung und korrekten Bügellänge durch Messungen, beispielsweise am Kopf des Brillenträgers, gewonnen werden und auf den vorfixierten Bügel übertragen werden.

Nachdem auf vorstehend erläuterte Weise die Bügellänge und die Innenneigung des Bügelendstücks 4 am vorfixierten Bügel eingestellt worden sind, wird die Hülse 36 weiter als im vorfixierten Zustand auf die Umfangswand 26 geschraubt, so daß die Umfangswand 26 im Bereich ihres freien Endes 28 vom sich konisch verjüngenden Endabschnitt 40 stärker radial zusammengedrückt und verformt wird und dadurch stärker gegen den in der Bohrung 24 sitzenden Zapfen 14 gepreßt wird, so daß die Haftreibung zwischen dem Zapfen 14 und der Umfangswand 26 zunimmt. Dabei nimmt dann schließlich die Hülse 36 auf der Umfangswand 26 die in den Fig. 1 und 2 dargestellte Stellung ein, in der die Haftreibung so groß ist, daß sich die relative Anordnung zwischen der Umfangswand 26 bzw. dem ersten Abschnitt 18 des Bügelendstücks 4 einerseits und dem Zapfen 14 bzw. dem Schaft des Bügels 2 andererseits durch solche Kräfte nicht mehr ändern kann, wie sie bei bestimmungsgemäßem Gebrauch der Brille auftreten. Dies heißt mit anderen Worten, daß das Bügelendstück 4 und der Schaft 2 endgültig aneinander fixiert sind. Die zum Zweck der Fixierung vorgesehene Fixiereinrichtung umfaßt die Hülse 36 und die radial zusammendrückbare und verformbare Umfangswand 26 mit ihrem freien Ende 28, an dem die Kontaktfläche 34 ausgebildet ist. Dabei bildet die Hülse 36 ein Klemmelement, mittels dessen der Zapfen 14 in der Bohrung 24 festklemmbar ist. Günstig bei der vorstehend beschriebenen Ausführungsform ist, daß die Stärke der Haftreibung zwischen der Umfangswand 26 und dem Zapfen 14 stufenlos einstellbar ist, indem die Hülse 36 in ihrer Axialrichtung auf der Umfangswand 26 verlagert wird. Eine sich während des Anpassens des Bügels möglicherweise als zu stark oder zu schwach erweisende Haftreibung bzw. Klemmung kann somit im erforderlichen Sinn geändert werden. Günstig ist ferner, daß die beschriebene Ausbildung der Steckverbindung und ihrer Fixiereinrichtung es ermöglicht, daß die Relativlage zwischen dem Bügelend stück 4 und dem Schaft 2 unmittelbar am Kopf des Brillenträgers änderbar ist, d.h. daß das Bügelendstück unmittelbar am Kopf in die korrekte Längsstellung auf dem Schaft 2 geschoben bzw. gezogen und mit der korrekten Innenneigung versehen werden kann. Es ist nicht notwendig, die Brille vom Kopf des Brillenträgers abzunehmen, um durch Manipulationen am Bügel die Relativlage zu ändern, wobei dann die geänderte Relativlage erst nach erneutem Aufsetzen der Brille überprüft werden könnte. Schließlich ist günstig, daß die Einstellung der Haftreibung bzw. Klemmkraft bis zur endgültigen Fixierung keine Änderung der Relativlage zwischen dem Bügelendstück 4 und dem Schaft 2 erfordert oder herbeiführt, so daß die im vorfixierten Zustand beim Anpassen gefundene korrekte bzw. gewünschte Relativlage mit der Relativlage nach der endgültigen Fixierung übereinstimmt.

In Abwandlung der vorstehend beschriebenen Ausführungsform kann vorgesehen sein, daß die Bohrung 44 ein Innengewinde aufweist, das mit einem entsprechenden Außengewinde am Zapfen 14 in Eingriff steht und daß statt des Außengewindes 32 und des Innengewindes im Endabschnitt 42 der Hülsenbohrung 38 jeweils glatte zylindrische Oberflächen vorgesehen sind. Ferner kann in Abwandlung des vorstehend beschriebenen ersten Ausführungsbeispiels vorgesehen sein, daß die Hülse 36 weder mit der Umfangswand 26, noch mit dem Zapfen 14 bzw. dem Schaft 2 in Gewindeeingriff steht und bei ansonsten gleicher Ausbildung wie beim beschriebenen Ausführungsbeispiel auf der Umfangswand 26 und dem Zapfen 14 in Zapfenlängsrichtung verschiebbar ist. Bei der letztgenannten Ausbildung sind vorzugsweise zwischen der Hülse 36 und der Umfangswand 26 wirkende, in den Fig. 1 bis 3 nicht dargestellte Rast elemente vorgesehen, die in Eingriff miteinander stehen, wenn die Hülse ihre maximaler Zusammendrückung der Umfangswand 26 entsprechende Axialstellung, d.h. ihre Stellung bei endgültiger Fixierung, einnimmt.

Ein weiteres Ausführungsbeispiel der Erfindung ist in den Fig. 4 bis 9 dargestellt. Im Zusammenhang mit dem zweiten Ausführungsbeispiel sind für gleiche bzw. entsprechende Elemente wie beim ersten Ausführungsbeispiel gleiche Bezugszeichen verwendet. Diese gleichen bzw. entsprechenden Elemente werden nicht erneut erläutert. Vielmehr werden im folgenden lediglich die Unterschiede des zweiten Ausführungsbeispiels gegenüber dem ersten Ausführungsbeispiel beschrieben.

Das Klemmelement der Fixiereinrichtung des zweiten Ausführungsbeispiels ist als Schieber 50 ausgebildet, der auf die Umfangswand 26 aufgeschoben ist und mit dieser in Eingriff steht. Im vollständig aufgeschobenen Zustand des Schiebers 50 geht dessen Oberfläche bündig in die Oberfläche des ersten Abschnitts 18 und der Umfangswand 26 über, wie dies die Fig. 4, 5 und 6 zeigen und wie dies ähnlich bei der Hülse 36 und dem ersten Abschnitt 18 des ersten Ausführungsbeispiels vorgesehen ist.

Der Schieber 50 ist als längliches Element ausgebildet, das eine in Längsrichtung des Zapfens 14 verlaufende Längsnut 52 aufweist, die sich über den größten Teil der Länge des Schiebers 50 erstreckt, wie insbesondere Fig. 9 zeigt. An den mit der Längsnut 52 versehenen Abschnitt des Schiebers 50 schließt sich nach rechts in Fig. 9 ein hülsenförmiger Abschnitt 54 an, in dem eine Bohrung 56 ausgebildet ist, die den gleichen Durchmesser wie die Bohrung 24 im ersten Abschnitt 18 hat und bei aufgesetztem Schieber in Verlängerung der Bohrung 24 verläuft, so daß der Zapfen 14 bei am Schaft 2 fixiertem Bügelendstück 4 sowohl durch die Bohrung 56 als auch durch die Bohrung 24 verläuft und darüber hinaus den Schieber 50 bei einer Axialverschiebung führt. Die äußere Oberfläche des Abschnitts 54 des Schiebers 50 ist sich verjüngend ausgebildet, so daß ein allmählicher Übergang vom Abschnitt 18 des Bügelendstücks 4 zum Schaft 2 erfolgt.

Die Längsnut 52 weist einen Nutboden 58 sowie zwei Nutflanken 60 und 62 auf. Die Längsnut hat wie im dargestellten Ausführungsbeispiel beispielsweise ein Schwalbenschwanzprofil, so daß sie in Richtung zu ihrem Nutboden 58 weiter wird. In einem in Fig. 9 linken Endabschnitt 64 der Längsnut 52 verlaufen deren Nutflanken 60 und 62 parallel zueinander, wogegen sie sich in einem in Fig. 9 rechten Endabschnitt 66 der Längsnut 52, der sich zwischen dem Endabschnitt 64 und dem Abschnitt 54 befindet, allmählich einander nähern bzw. zueinander konvergieren, wie dies Fig. 9 erkennen läßt.

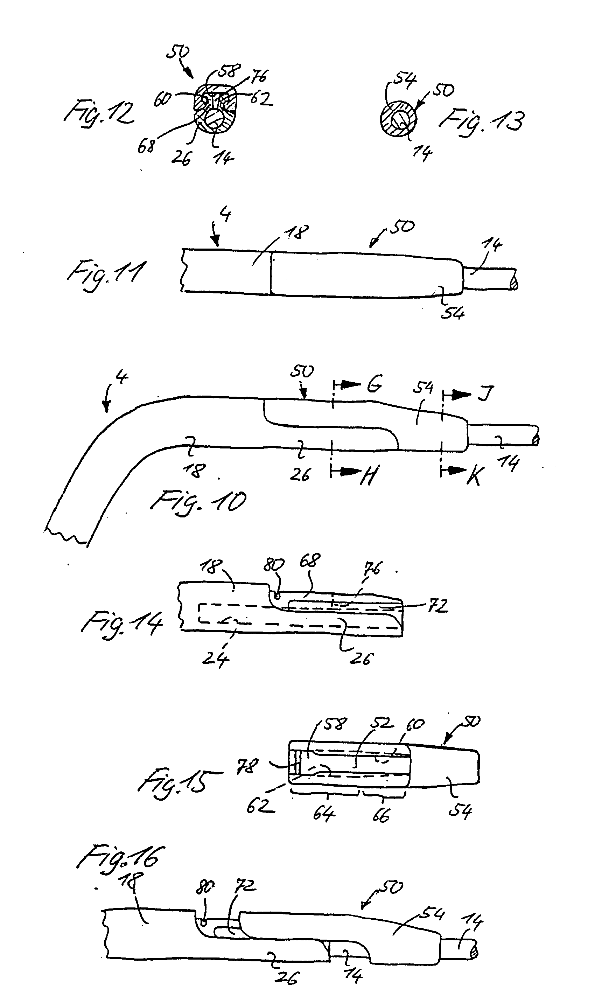

Die Umfangswand 26 ist mit einem in Zapfenlängsrichtung verlaufenden Vorsprung 68 versehen, der ein zur Längsnut 52 komplementäres Profil aufweist und mit dieser in Eingriff steht, wobei jedoch die Flanken 70 und 72 des Vorsprungs 68 über dessen gesamte Länge und somit über die gesamte Länge der Längsnut 52 des Schiebers 50 parallel zueinander verlaufen. Verlauf und Abstand voneinander der beiden Flanken 70 und 72 sind derart, daß sie mit den Nutflanken 60 und 62 im Endabschnitt 66 in Berührung stehen und von den letztgenannten Nutflanken Druck auf die Flanken 70 und 72 ausgeübt wird, wenn der Schieber 50 vollständig auf die Umfangs wand 26 aufgeschoben ist. Dieser Druck hat eine radiale Zusammendrückung und Verformung des Vorsprungs 68 und somit der Umfangswand 26 zur Folge, wobei sich das Ausmaß der Zusammendrückung und Verformung danach richtet, wie weit der Schieber 50 auf den Vorsprung 62 (von rechts in den Fig. 4 und 5) aufgeschoben ist.

Bei der Ausführungsform gemäß den Fig. 5 bis 9 ist die Bohrung 24 im wesentlichen entlang der Längsmittellinie des Vorsprungs 68 derart ausgebildet, daß die Bohrung 24 nicht vollständig von der Umfangswand 26 umschlossen ist, sondern vielmehr am Kopf des Vorsprungs 68 offen ist, so daß der in die Bohrung 24 eingesteckte Zapfen 14 teilweise radial aus dem Kopf des Vorsprungs 68 vorsteht, wie insbesondere Fig. 6 erkennen läßt. Dementsprechend ist der Nutboden 58 mit einer rillenförmigen Ausnehmung versehen, die den radial vorstehenden Teil des Zapfens aufnimmt, wie ebenfalls Fig. 6 erkennen läßt. Der mit der Längsnut 52 versehene Abschnitt des Schiebers 50 ist auf der inneren, d.h. dem Kopf des Brillenträgers zugewandten Seitenfläche der Umfangswand 26 angeordnet, so daß die in Längsrichtung verlaufenden Fugen zwischen dem Schieber 50 und der Umfangswand 26 auf der Oberseite und der Unterseite des ersten Abschnitts 18 verlaufen, wie die Fuge 74 in der Draufsicht gemäß Fig. 5 zeigt.

Das Anpassen des Bügels gemäß dem zweiten Ausführungsbeispiel erfolgt grundsätzlich in gleicher Weise, wie dies vorstehend für den Bügel gemäß dem ersten Ausführungsbeispiel beschrieben ist, wobei lediglich der Unterschied besteht, daß die Erhöhung der Haftreibung bzw. Klemmung zwischen der Umfangswand 26 und dem Zapfen 14 beim zweiten Ausführungsbeispiel durch zunehmendes axiales Aufschieben des Schiebers 50 statt durch Aufschrauben der Hülse 36 des ersten Ausführungsbeispiels erfolgt.

Die Fig. 10 bis 16 zeigen ein drittes Ausführungsbeispiel der Erfindung, bei dem es sich um eine Abwandlung des zweiten Ausführungsbeispiels handelt. Es sind wiederum für gleiche bzw. entsprechende Elemente die gleichen Bezugzeichen wie bei den beiden ersten Ausführungsbeispielen verwendet. Die gleichen bzw. entsprechenden Elemente werden im folgenden nicht näher erläutert. Vielmehr werden lediglich die Unterschiede zwischen dem dritten und dem zweiten Ausführungsbeispiel erläutert. Abweichend vom zweiten Ausführungsbeispiel ist beim dritten Ausführungsbeispiel vorgesehen, daß der Schieber 50 auf der Oberseite der Umfangswand 26 angeordnet ist. Ferner ist beim dritten Ausführungsbeispiel vorgesehen, daß die Umfangswand 26 die Bohrung 24 vollständig umschließt und der Vorsprung 68 mit einem Längsschlitz 76 versehen ist, der radial von der Bohrung 24 bis zum Kopf des Vorsprungs 68 verläuft. Wie Fig. 12 erkennen läßt, handelt es sich bei dem Profil der Längsnut 52 nicht um ein Schwalbenschwanzprofil sondern um ein Hammerkopfprofil.

Um den Schieber 50 in seiner maximaler Zusammendrückung der Umfangswand 26 entsprechenden Stellung zu sichern, weist die dritte Ausführungsform Rastelemente in Form eines in Umfangsrichtung verlaufenden Vorsprungs 78 am Schieber 50 (siehe Fig. 15) sowie eine Rille 80 auf der Außenseite der Umfangswand 26 auf.

Das Anpassen des Bügels gemäß der dritten Ausführungsform erfolgt grundsätzlich in gleicher Weise wie das Anpassen des Bügels gemäß der zweiten Ausführungsform.

Der erste Abschnitt 18 des Bügelendstücks 4 und die Umfangswand 26 bestehen beim zweiten und dritten Ausführungsbeispiel ebenso wie beim ersten Ausführungsbeispiel vorzugsweise aus einem Kunststoff, insbesondere einem Polyetherimid. Ein Metall kommt als Werkstoff für die Umfangswand 26 aller drei Ausführungsbeispiele nur dann in Frage, wenn sich die Umfangswand mittels des durch die Hülse bzw. den Schieber gebildeten Klemmelementes hinreichend zusammendrücken und verformen läßt, um die erforderliche Klemmung zu erzielen. Als Werkstoff für den Schieber 50 der zweiten und der dritten Ausführungsform kommen ebenso wie für die Hülse der ersten Ausführungsform außer Kunststoffen auch metallische Werkstoffe in Frage, die wegen ihrer hohen Festigkeit und der durch sie verursachten geringen Verformbarkeit sogar besonders geeignet sind.

Bei den vorstehend beschriebenen Ausführungsbeispielen sind die Oberflächen der Bohrung 24 und des Zapfens 14 glatte zylindrische Oberflächen. Zur Erhöhung der Haftreibung kann jedoch auch vorgesehen sein, daß zumindest eine dieser Oberflächen aufgerauht ist oder daß beide eine feinfaserige Beschaffenheit haben, um auf diese Weise die Haftung zwischen den beiden Oberflächen und somit die Klemmwirkung im endgültig fixierten Zustand zu erhöhen.

Ferner kann abweichend von den vorstehend beschriebenen Ausführungsbeispielen vorgesehen sein, daß der Zapfen 14 in seiner Längsrichtung verlaufende, radial vorstehende Vorsprünge aufweist, so daß er beispielsweise ein Profil in Form eines regelmäßigen Vielecks hat. Bei dieser Ausbildung ist dann im endgültig fixierten Zustand die Haftreibung zwischen dem Zapfen 14 und der Umfangswand 26 ergänzt durch einen Formschluß zwischen den beiden letztgenannten Elementen. Dabei erfolgt die Dimensionierung vorzugsweise derart, daß der Formschluß im vorfixierten Zustand noch nicht herbeigeführt ist, sondern erst beim Übergang zum endgültig fixierten Zustand zustandekommt.

Soweit die Erfindung vorstehend anhand der Ausführungsbeispiele und ihrer Abwandlungen erläutert ist, ist die zwischen dem Bügelendstück 4 und dem Schaft 2 herbeigeführte Verbindung lösbar. Wenn auf Lösbarkeit dieser Verbindung verzichtet werden kann, kann vorgesehen sein, daß die Oberfläche der Bohrung 24 oder des Zapfens 14 mit einem durch Druck freisetzbaren Klebstoff beschichtet ist, der erst dann aktiviert wird, wenn das Klemmelement in Form der Hülse bzw. des Schiebers die maximaler Zusammendrückung der Umfangswand 26 entsprechende Stellung einnimmt. Es entsteht dann eine Klebeverbindung, die sich durch besonders hohe Festigkeit und Belastbarkeit auszeichnet.

Ein Bügel für eine Brille weist eine Steckverbindung zwischen dem Schaft des Bügels und einem zunächst getrennt vom Schaft des Bügels gefertigten Bügelendstück auf. Die Steckverbindung umfaßt eine Bohrung im einem der beiden Elemente sowie einen Zapfen am anderen der beiden Elemente, der in die Bohrung gesteckt ist, sowie eine Fixiereinrichtung zum Sichern der Relativlage zwischen dem Bügelendstück und dem Schaft. Die Fixiereinrichtung weist ein Klemmelement auf, das unterschiedliche Axialstellungen bezüglich der die Bohrung umgebenden Umfangswand einnehmen kann und je nach seiner Axialstellung die Umfangswand mehr oder weniger stark radial zusammendrückt und dadurch den Zapfen in der Bohrung festklemmt. Diese Ausbildung der Fixiereinrichtung erleichtert eine genaue Einstellung der Bügellänge sowie der Innenneigung des Bügels beim Anpassen desselben an die Kopfgeometrie des einzelnen Brillenträgers.

## Ansprüche

1. Bügel für eine Brille, mit einem länglichen, im wesentlichen geraden Schaft, der an seinem ersten Schaftende mittels eines Scharniers mit einer Backe oder einem Gelenkstück der Brille verbindbar ist, und mit einem Bügelendstück, das einen länglichen, im wesentlichen geraden ersten Abschnitt, der in Verlängerung des Schaftes verläuft, und einen sich an den ersten Abschnitt anschließenden, länglichen zweiten Abschnitt aufweist, der vom ersten Abschnitt aus unter Einschluß eines Winkels kleiner als 180° nach unten verläuft, wobei der erste Abschnitt des Bügelendstücks und das zweite Schaftende mittels einer Steckverbindung miteinander verbunden sind, die eine Bohrung in einem der Elemente (erster Abschnitt oder Schaft), einen in der Bohrung sitzenden Zapfen am anderen der beiden Elemente sowie eine Fixiereinrichtung aufweist, die den ersten Abschnitt und das zweite Schaftende in ihrer Relativlage festhält, und wobei die Oberfläche des Zapfens und/oder der Bohrung über die gesamte Länge des Eingriffs zwischen Bohrung und Zapfen zylindrisch ausgebildet ist, dadurch gekennzeichnet, daß die Fixiereinrichtung ein Klemmelement (36, 50) aufweist, das an der die Bohrung (24) umgebenden Umfangswand (26) angreift und die Umfangswand je nach seiner Axialstellung relativ zur Umfangswand mehr oder weniger stark radial derart zusammendrückt und verformt, daß sich die Oberflächen von Zapfen (14) und Bohrung (24) unterentsprechend unterschiedlichen Drücken berühren.

2. Bügel nach Anspruch 1, dadurch gekennzeichnet, daß der Zapfen (14) in seiner Längsrichtung verlaufende, radial vorstehende Vorsprünge aufweist und daß über die gesamte Länge des Eingriffs zwischen Bohrung (24) und Zapfen vor dem Zusammendrücken der Umfangswand (26) die Oberfläche der Bohrung zylindrisch ausgebildet ist.

3. Bügel nach Anspruch 2, dadurch gekennzeichnet, daß der Zapfen (14) ein Profil in Form eines regelmässigen Vielecks hat.

4. Bügel nach Anspruch 1, dadurch gekennzeichnet, daß über die gesamte Länge des Eingriffs zwischen Bohrung (24) und Zapfen (14) die Oberflächen von Bohrung und Zapfen zylindrisch ausgebildet sind.

5. Bügel nach einem der Ansprüche 1 bis 4, dadurch gekennzeichnet, daß die Oberfläche der Bohrung (24) und/oder des Zapfens (14) aufgerauht ist.

6. Bügel nach einem der Ansprüche 1 bis 4, dadurch gekennzeichnet, daß die Oberflächen der Bohrung (24) und des Zapfens (14) eine feinfaserige Beschaffenheit haben.

7. Bügel nach einem der Ansprüche 1 bis 6, dadurch gekennzeichnet, daß die Oberfläche der Bohrung (24) und/oder des Zapfens (14) mit einem durch Druck freisetzbaren Klebstoff beschichtet ist.

8. Bügel nach einem der Ansprüche 1 bis 7, dadurch gekennzeichnet, daß die Umfangswand (26) aus einem Kunststoff besteht.

9. Bügel nach einem der Ansprüche 1 bis 8, dadurch gekennzeichnet, daß die Bohrung (24) im ersten Abschnitt (18) des Bügelendstücks (4) ausgebildet ist und daß der Zapfen (14) durch das zweite Schaftende gebildet ist.

10. Bügel nach einem der Ansprüche 1 bis 9, dadurch gekennzeichnet, daß das Klemmelement eine Hülse (36) mit einer Hülsenbohrung (38) ist, die sich an ihrem einen, dem freien Ende (28) der Umfangswand (26) zugeordneten Endabschnitt (40) konisch verjüngt und die an ihrem anderen Endabschnitt (42) ein Innengewinde aufweist, daß auf der Außenseite der Umfangswand ein Außengewinde (32) ausgebildet ist, mit dem das Innengewinde in Eingriff steht, und daß am freien Ende der Umfangswand radial außen eine Kontaktfläche (34) ausgebildet ist, die in Kontakt mit der Oberfläche des konisch verjüngten Endabschnitts steht.

11. Bügel nach einem der Ansprüche 1 bis 9, dadurch gekennzeichnet, daß das Klemmelement eine Hülse (36) mit einer Hülsenbohrung (38) ist, die sich an ihrem einen, dem freien Ende (28) der Umfangswand (26) zugeordneten Endabschnitt (40) konisch verjüngt, daß am freien Ende der Umfangswand radial außen eine Kontaktfläche (34) ausgebildet ist, die in Kontakt mit der Oberfläche des konisch verjüngten Endabschnitts steht, und daß am Zapfen (14) ein Außengewinde ausgebildet ist, das in Eingriff mit einem Innengewinde der Hülse steht.

12. Bügel nach einem der Ansprüche 10 oder 11, dadurch gekennzeichnet, daß an der Hülse eine Werkzeugsangriffsfläche (46) ausgebildet ist.

13. Bügel nach Anspruch 12, dadurch gekennzeichnet, daß die Werkzeugangriffsfläche eine Querbohrung (46) in der Hülse ist.

14. Bügel nach einem der Ansprüche 1 bis 9, dadurch gekennzeichnet, daß das Klemmelement eine Hülse (36) mit einer Hülsenbohrung (38) ist, die sich an ihrem einen, dem freien Ende (28) der Umfangswand (26) zugeordneten Endabschnitt (40) konisch verjüngt und die an ihrem anderen Endabschnitt glatt zylindrisch ausgebildet ist, und daß am freien Ende der Umfangswand radial außen eine Kontaktfläche (34) ausgebildet ist, die in Kontakt mit der Oberfläche des konisch verjüngten Endabschnitts steht.

15. Bügel nach Anspruch 14, dadurch gekennzeichnet, daß an der Hülse (36) und der Umfangswand (26) Rastelemente ausgebildet sind, die in Eingriff miteinander stehen, wenn die Hülse ihre maximaler Zusammendrückung der Umfangswand entsprechende Axialstellung relativ zur Umfangswand einnimmt.

16. Bügel nach einem der Ansprüche 10 bis 15, dadurch gekennzeichnet, daß die Umfangswand (26) an ihrem freien Ende (28) zumindest einen Längsschlitz (30) aufweist.

17. Bügel nach einem der Ansprüche 1 bis 9, dadurch gekennzeichnet, daß das Klemmelement ein Schieber (50) mit einer in Zapfenlängsrichtung verlaufenden Längsnut (52) ist, die in Richtung zum Nutboden (58) weiter wird, daß die Umfangswand (26) einen in Zapfenlängsrichtung verlaufenden Vorsprung (68) aufweist, der ein zur Längsnut komplementäres Profil aufweist und mit dieser in Eingriff steht, so daß der Schieber auf dem Vorsprung verschiebbar ist, und daß die beiden Nutflanken (60, 62) in dem dem freien Ende (28) der Umfangswand zugeordneten Endabschnitt (66) der Längsnut zueinander konvergieren und in Kontakt mit den Flanken (70, 72) des Vorsprungs im Bereich des freien Endes der Umfangswand stehen.

18. Bügel nach Anspruch 17, dadurch gekennzeichnet, daß die Flanken (70, 72) des Vorsprungs (68) über dessen gesamte Länge parallel zueinander verlaufen.

19. Bügel nach Anspruch 17 oder 18, dadurch gekennzeichnet, daß die Umfangswand (26) einen Längsschlitz (76) aufweist, der radial von der Bohrung (24) bis zum Kopf des Vorsprungs (68) verläuft.

20. Bügel nach Anspruch 17 oder 18, dadurch gekennzeichnet, daß die Bohrung (24) im wesentlichen entlang der Längsmittellinie des Vorsprungs (68) verläuft und daß der Zapfen (14) teilweise radial aus dem Kopf des Vorsprungs vorsteht.

21. Bügel nach einem der Ansprüche 17 bis 20, dadurch gekennzeichnet, daß der Schieber (50) in Verlängerung seines mit der Längsnut (52) versehenen Abschnitts einen hülsenförmigen Abschnitt (54) aufweist, durch dessen Bohrung (66) der Zapfen (14) verläuft.

22. Bügel nach einem der Ansprüche 17 bis 21, dadurch gekennzeichnet, daß der Schieber (50) auf der Oberseite der Umfangswand (26) angeordnet ist.

23. Bügel nach einem der Ansprüche 17 bis 21, dadurch gekennzeichnet, daß der Schieber (50) auf einer der beiden Seitenflächen der Umfangswand (26) angeordnet ist.

24. Bügel nach einem der Ansprüche 17 bis 23, dadurch gekennzeichnet, daß am Schieber (50) und der Umfangswand (26) Rastelemente (78, 80) ausgebildet sind, die in Eingriff miteinander stehen, wenn der Schieber seine maximaler Zusammendrückung der Umfangswand entsprechende Axialstellung relativ zur Umfangswand einnimmt.

25. Bügel nach einem der Ansprüche 10 bis 24, dadurch gekennzeichnet, daß die Hülse (36) bzw. der Schieber (50) aus Metall besteht.

Fig. 1

Fig. 2

Fig. 3

Fig. 5

Fig. 6

Fig. 4

Fig. 8

Fig. 7

Fig. 9

0 274 563

Fig.12

Fig.13

Fig.11

Fig.10

Fig.14

Fig.15

Fig.16